# EUROPEAN PATENT APPLICATION

(11) **EP 4 675 440 A1**
(43) Date of publication of application: **07.01.2026**
(21) Application number: 24185623.6
(22) Date of filing: 01.07.2024
(51) Int. Cl.: G06F 11/34, G05B 1/03, G06F 30/27, G06F 30/23

(54) **METHOD AND SYSTEM FOR CONTROLLING A PRODUCTION PLANT TO MANUFACTURE A PRODUCT**

(71) Applicant: Siemens Aktiengesellschaft, 80333 München (DE)
(72) Inventor: DEPEWEG, Stefan, 13627 Berlin (DE); HEESCHE, Kai, 81539 München (DE); AMINE-EDDINE, Gabriel, Yateley GU46 6AL (GB)
(74) Representative: Siemens Patent Attorneys

(57) **Abstract**

A simulator (SIM) for determining simulated performance quantities (PRS) for design variants of the product (P) and a machine learning module (BNN) to be trained to determine predictive performance quantities (PRP) and their uncertainties (UC) are provided. Furthermore, a multitude of design data records (DR) each specifying a design variant are generated. A respective design data record (DR) is fed into the machine learning module (BNN), and/or the corresponding design variant is simulated. Using simulated performance quantities (PRS) as training data, the machine learning module (BNN) is trained in disjoint training phases (TP1, TP2, TP3). Between the disjoint training phases a correction factor (CF) for uncertainties (UC) determined by the machine learning module (BNN) is derived by means of simulated performance quantities (PRS). The correction factor (CF) is used to correct future uncertainties (UC). The corrected uncertainties (UC') are then used to decide whether to run or to skip a simulation. Accordingly, a performance value (PV) is derived from the simulated performance quantity (PRS) if the simulation is run, or otherwise from the predictive performance quantity (PRP) determined by the machine learning module. Depending on the generated performance values (PV), a performance-optimizing design data record (ODR) is determined from the generated design data records (DR). The performance-optimizing design data record (ODR) is then output for controlling the production plant.

## Description

Nowadays, the production of complex products like e.g., robots, motors, turbines, turbine blades, combustion engines, machining tools, vehicles, or their components often relies on sophisticated design systems. Such design systems usually provide design data which specify the product to be manufactured in detail. By such design data, a modern production system can be specifically controlled to manufacture the specified product.

In order to optimize a performance of a product with regard to given objectives, it is often aspired to automatically optimize the design data for the product. Such a performance may pertain to a power, a yield, a speed, a running time, a precision, an error rate, a resource consumption, an efficiency, a pollutant emission, a stability, a wear, a lifetime, and/or other target performance quantities of the product.

For the purpose of optimizing the performance, some design systems use so-called multidisciplinary optimization (MDO) tools, like e.g. Simcenter HEEDS. These tools can be supported by simulation tools like Siemens NX or ANSYS, or by optimization tools like the Python library SHERPA for tuning hyperparameters of machine learning models.

MDO tools usually simulate design variants of a product as specified by various design data records and look for those design data records which optimize the simulated performance of the product, in particular with regard to several objectives.

Such simulations, however, often consume a high amount of computational resources to determine the target performance quantities for each design variant. To reduce the computing demand, so-called surrogate models, e.g., based on machine learning, may be used to predict the outcome of a simulation. Such surrogate models, however, often have a poor accuracy.

It is an object of the present invention to provide a method and a system for controlling a production plant to manufacture a product, that allow for a more efficient design optimization.

This object is achieved by a method according to patent claim 1, a system according to patent claim 12, a computer program product according to patent claim 13, and a computer readable storage medium according to patent claim 14.

For controlling a production plant to manufacture a product a simulator and a machine learning module are provided. Furthermore, design data records, each structurally specifying a design variant of the product, are successively generated. The simulator is provided for simulating a design variant, and for determining a simulated performance quantity for that design variant. The machine learning module, on the other hand, is to be trained to determine from a design data record, a predictive performance quantity for the corresponding design variant and an uncertainty of that predictive performance quantity. The simulated and predicted performance quantities may pertain to a power, a yield, an efficiency, a speed, a running time, a precision, an error rate, a tendency to oscillate, a resource consumption, an aerodynamic efficiency, an energy efficiency, a pollutant emission, a stability, a wear, a lifetime, and/or to other target performance quantities of the design variant. A respective generated design data record is input into the machine learning module, or the corresponding design variant is simulated by the simulator. According to the invention, the machine learning module is trained in disjoint training phases using simulated performance quantities as training data. Between the disjoint training phases, a correction factor for uncertainties determined by the machine learning module is derived by means of simulated performance quantities. Then, for a subsequently generated design data record, an uncertainty determined by the machine learning module is corrected by the correction factor. Depending on the corrected uncertainty, it is then decided whether to run or to skip the simulation. Accordingly, a performance value is derived from the simulated performance quantity if the simulation is run, or otherwise from the predictive performance quantity determined by the machine learning module. In particular, the simulation may be skipped, if a relatively high corrected uncertainty indicates a relatively poor prediction quality. Depending on the generated performance values, a performance-optimizing design data record is determined from the generated design data records. The performance-optimizing design data record is then output for controlling the production plant.

For performing the inventive method, a system, a computer program product, and a non-transient computer readable storage medium are provided.

The inventive method and/or the inventive system may be implemented by means of one or more processors, computers, application specific integrated circuits (ASIC), digital signal processors (DSP), programmable logic controllers (PLC), and/or field-programmable gate arrays (FPGA). Moreover, the inventive method may be executed in a cloud and/or in an edge computing environment.

The invention allows to skip expensive simulations in cases where a prediction of the machine learning module is likely to be accurate and/or where the prediction indicates that a design variant is likely to perform worse than previously assessed design variants and, therefore, is unlikely to be selected for manufacturing the product.

In order to decrease the number of expensive simulations, it is desirable to improve the predictions of the machine learning module. On the one hand, this can be achieved by training the machine learning module in disjoint training phases using simulated performance quantities from previous simulations as training data. On the other hand, the inventive method allows to use simulation results between those training phases to correct uncertainties determined by the machine learning module. In this way, simulation results can be immediately utilized for improving predictions of the machine learning module without waiting till the next training phase. In particular, a systematic overestimation or underestimation of the uncertainty can be often mitigated, thus improving the decision on running or skipping a simulation in many cases significantly.

Particular embodiments of the invention are specified by the dependent claims.

According to a preferred embodiment of the invention, each training phase may be only performed after multiple, e.g. 50, simulated performance quantities not used in previous training phases have accumulated. In this way each training phase can rely on a sufficient number of new unseen design variants, thus improving training efficiency.

Accordingly, a first training phase may be only performed after a predetermined first number, e.g. 100, of design variants was simulated.

Correspondingly, after a given training phase, a next training phase may be only performed after a predetermined second number, e.g. 50, of new design data records was generated and/or after a third number, e.g. 50, of new design variants was simulated.

According to a further embodiment of the invention, an execution of a simulation may trigger a calculation or an update of the correction factor. Preferably, the correction factor is calculated or updated each time a simulation is performed after the first training phase. In this way, simulation results can be used immediately without waiting for the next training phase. Moreover, it turns out that the determination of the correction factor is more robust if it is based on data not used in previous training phases.

Furthermore, between the training phases, simulated performance quantities not used in previous training phases may be used as test data for determining a prediction quality of the machine learning module.

Depending on that prediction quality a training phase may be started, stopped, or executed, the correction factor may be derived, and/or the decision on running or skipping the simulation may be made.

According to a particular advantageous embodiment of the invention, the correction factor may be determined by means of a maximum likelihood estimation. In this way, a most likely correction factor may be searched which brings the predicted performance quantities and/or the predicted uncertainties in line with the simulated performance quantities.

In particular, multiple uncertainty scaling factors may be provided, e.g. from a predetermined list or from a generator. For each respective uncertainty scaling factor, a likelihood for a distribution of simulated performance quantities being in line with corresponding predictive performance quantities and corresponding uncertainties scaled by the respective uncertainty scaling factor is calculated. Then, an uncertainty scaling factor with a highest or with a particular high likelihood may be selected for deriving the correction factor. Preferably, a previously determined correction factor CTₚᵣₑᵥ may be smoothly modified by the selected uncertainty scaling factor MLUC to calculate an updated correction factor CT_{new}, e.g. like CT_{new} = A*MLUC + (1-A)*CTₚᵣₑᵥ, with 'A' denoting a smoothing factor. Alternatively, the correction factor may be directly set to the selected uncertainty scaling factor.

According to a further embodiment of the invention, the machine learning module may comprise or implement a Bayesian machine learning model, a Bayesian neural network, a Gaussian process model and/or another uncertainty-aware machine learning model. For the preceding models, many efficient learning methods are known which allow training the models to generate predictions in the form of predictive quantities or statistical distributions of such quantities in a consistent and uniform way. Some pertinent machine learning methods for training uncertainty-aware machine learning models are e.g. described in "Pattern Recognition and Machine Learning" by Christopher M. Bishop, Springer 2011.

According to a further embodiment of the invention, the uncertainty may be particularly represented by a statistical variance, a statistical standard deviation, a confidence interval, a probability distribution, and/or a discrete probability distribution. Furthermore, the uncertainty may be represented by an empirical distribution, a categorical distribution, and/or an information-theoretic quantity, like the entropy of the probability distribution. Such statistical distributions may be considered as distributions of plausible predictions.

Particular embodiments of the invention are described in the following paragraphs with reference to the figures. The figures illustrate in schematic representation:
- Figure 1: a design system controlling a production plant to manufacture a product,
- Figure 2: a training of a machine learning module in a sequence of disjoint training phases,
- Figure 3: a design system in a training phase, and
- Figure 4: an optimization of a product design by a design system.

In the figures, common reference signs denote the same or corresponding entities, which are preferably embodied as described at the respective place.

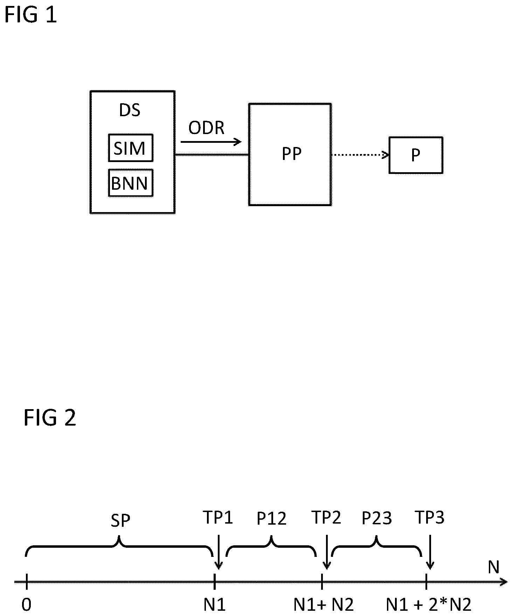

Figure 1 shows in schematic representation, a design system DS coupled to a production plant PP and controlling the production plant PP to manufacture a product P. The production plant PP may be or may comprise a manufacturing plant, a robot, a machining tool, and/or other devices for manufacturing or machining products by means of design data. The product P to be manufactured may be a robot, an electrical or electronical device, a motor, a turbine, a turbine blade, a combustion engine, a machining tool, a vehicle, a subproduct, a device, or a component thereof.

A design or design variant of the product P to be manufactured is structurally specified by design data in the form of one or more design data records. In particular, such design data records may specify a geometry, a structure, a property, a production step, a material, a component, and/or a part of the product P.

According to the present embodiment, the design system DS should be enabled to automatically generate design data records ODR which are optimized with regard to one or more predefined performance objectives for the product P.

The one or more predefined performance objectives are aimed at optimizing one or more performance quantities of the Product P. In that respect, the terms optimization or optimizing should also comprise the meaning of getting closer to an optimum.

Such a performance quantity may be a power, a yield, an efficiency, a speed, a running time, a precision, an error rate, a tendency to oscillate, a resource consumption, an aerodynamic efficiency, an energy efficiency, a pollutant emission, a stability, a wear, a lifetime and/or another target quantity of the product P. Furthermore, a performance quantity may pertain to a fulfillment of one or more predefined constraints by the product P. Such a constraint may pertain to a geometrical limit, a temperature limit, a pressure limit, a speed limit, an electrical limit, a force limit, a power limit, a pollution limit, and/or to another requirement which should be fulfilled by the product P.

The design system DS generates such performance-optimizing design data records ODR and transmits them to the production plant PP. By means of the transmitted performance-optimizing design data records ODR, the production plant PP is controlled and manufactures the performance-optimized and constraint-compliant product P as specified by the design data records ODR. For manufacturing products specified by design data, many efficient computer-operated manufacturing tools are available.

For finding such performance-optimizing design data records ODR, the design system DS generates a large number of candidate design data records and evaluates a performance of each design variant specified by these design data records. The performance-optimizing design data records ODR are then selected or determined from those candidate design data records which yield a highest or particular high performance.

Here, the performance of a respective design variant may be quantified by a performance value derived from the one or more performance quantities, e.g. as a weighted sum of these quantities.

For determining the performance of a respective design variant specified by a design data record, the design system DS comprises a numerical simulator SIM and a machine learning module BNN. The simulator SIM is enabled to carry out a detailed physical high-fidelity simulation of a respective design variant on the basis of a corresponding design data record. In particular, the simulator SIM is enabled to determine the one or more performance quantities of the respective design variant. For performing such detailed physical simulations, many efficient methods, e.g. finite-element methods, are available.

As such simulations often consume a high amount of computational resources, the machine learning module BNN is intended to act as a surrogate for the simulator SIM. In many cases, however, there is no or only little training data available for training such a surrogate model in advance of the optimization process. Hence, the machine learning model BNN should be trained and/or updated during the optimization process, using the results of previous simulations of the simulator SIM as training data.

Figure 2 illustrates a training of the machine learning module BNN in a sequence of mutually disjoint training phases TP1, TP2, and TP3 during such an optimization process. On a horizontal axis, a count N of generated candidate design data records is tracked. It is assumed that at the beginning of the process, no training data are available. Therefore, during a starting phase SP of the process, all candidate design data records are simulated until a predefined first number N1, e.g. 100, of simulations were performed. At this point, preferably immediately after the starting phase SP, the first training phase TP1 is carried out, using the simulation results of the starting phase SP for a first training of the machine learning module BNN. The concrete training process is described in more detail below.

Within an intermediate phase P12 starting preferably immediately after the first training phase TP1 and ending before the next training phase TP2, the newly generated candidate design data records are evaluated by the partially trained machine learning module BNN. Based on the respective evaluation of the respective candidate design data record, a decision is made whether a simulation of this respective candidate design data record is run or skipped.

Preferably, a simulation is skipped if the evaluation by the machine learning module BNN is likely to be sufficiently accurate and/or if the evaluation indicates that the respective design variant is likely to perform worse than previously assessed design variants. In the latter case, the respective design variant is unlikely to be selected for manufacturing the product P. If the simulation is not skipped, the simulation is run and the corresponding simulation results are recorded.

After a predefined second number N2, e.g. 50, of new candidate design data records were generated during the intermediate phase P12, the latter ends and the second training phase TP2 is started. The second training phase TP2 uses simulation results of those new candidate design data records which were actually simulated. Alternatively, the second training phase TP2 may be started if the number of newly simulated design data records reaches a predefined third number, e.g. 50.

The second training phase TP2 is followed by a further intermediate phase P23, which lasts until the third training phase TP3 is started. The intermediate phase P23 is executed in an analogous way as the intermediate phase P12. Accordingly, the training phase TP3 is performed in an analogous way as the training phases TP1 and TP2.

According to the present embodiment, each training phase TP1, TP2, or TP3, respectively, uses only simulation results which were not used in previous training phases. Of course, the training phase TP3 can be followed by further pairs of intermediate and training phases.

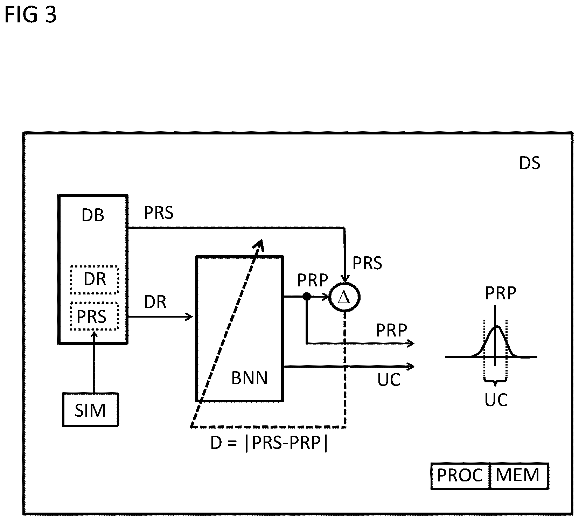

Figure 3 illustrates the design system DS in a particular training phase, here TP1, TP2 or TP3. The design system DS comprises one or more processors PROC for performing the method steps of the invention and one or more data storages MEM for storing related data.

The design system DS further comprises a database DB where the above-mentioned simulation results of the simulator SIM are successively stored. For each of the simulated design variants specified by a respective candidate design data record DR, the respective simulation result comprises the one or more performance quantities of the respective design variant.

According to the present embodiment, the machine learning module BNN of the design system DS is implemented as a Bayesian neural network. Such a Bayesian neural network can be considered as a statistical estimator, which has an intrinsic capability to automatically estimate realistic uncertainties of its predictions. The Bayesian neural network serves the purpose of determining statistical estimation values for e.g., a mean, a variance, a standard deviation, and/or a probability distribution, from empirical data of a sample of a statistical population. A Bayes estimator may particularly optimize a posterior expected value of a loss function, cost function, reward function, or utility function.

By means of known machine learning methods and using sample data from a statistical population, a Bayesian neural network, here BNN, can be trained to estimate a predictive probability distribution for a given new data record of that statistical population. Additionally, or alternatively to the Bayesian neural network, the machine learning module BNN may comprise or implement a Gaussian process model, which can also be trained to estimate a predictive probability distribution for a given new data record of a statistical population.

A predictive probability distribution may be represented by a predicted mean or median together with its statistical variance or standard deviation. In this case, the variance or standard deviation may be regarded as uncertainty of the mean or median value. Additionally or alternatively, an uncertainty of a predictive probability distribution may be specified by an error interval, a confidence interval, or by other measures of a width of that probability distribution. In that sense, a Bayesian neural network and a Gaussian process model can be regarded as uncertainty-aware machine learning models.

Some pertinent machine learning methods for training uncertainty-aware machine learning models are e.g. described in the publication "Pattern Recognition and Machine Learning" by Christopher M. Bishop, Springer 2011.

According to the present embodiment, the Bayesian neural network BNN should be trained to generate from a design data record DR specifying a design variant of the product P, a prediction quantifying the one or more performance quantities of that design variant, together with an estimated uncertainty of that prediction.

For the sake of simplicity, only one such performance quantity of the design variants is explicitly considered below. In that sense, a respective prediction of the Bayesian neural network BNN is referred to as predictive performance quantity PRP. Accordingly, a respective simulation result is referred to as simulated performance quantity PRS in the following.

The term training generally means that a mapping from input data of a machine learning module to output data of that machine learning module is optimized with regard to one or more criteria during a training phase. In the present case, the criteria comprise estimating a performance quantity of a design variant together with an uncertainty of that estimation as precisely as possible. The mapping can be optimized by tuning mapping parameters of the machine learning module. In case of artificial neural networks, a connective structure of its neurons and/or weights of connections between the neurons may be varied in order to optimize the mapping. For such optimizations a multitude of numerical standard methods, like e.g. gradient descent methods, particle swarm methods, or genetic algorithms are available.

For training the Bayesian neural network BNN, new candidate design data records DR and corresponding new simulated performance quantities PRS are read from the database DB as training data for the current training phase. The adjective "new" means that these records DR and quantities PRS were not used in previous training phases and, therefore, are exclusively used in the current training phase.

The new candidate design data records DR are fed into the Bayesian neural network BNN as input data. From a respective new candidate design data record DR, the Bayesian neural network BNN generates a predictive performance quantity PRP, which is desired to approximate the actual performance quantity of the design variant specified by the respective new candidate design data record DR. Furthermore, the Bayesian neural network BNN outputs a predictive uncertainty UC of that respective predictive performance quantity PRP.

For each new candidate design data record DR, the corresponding predictive performance quantity PRP is output by the machine learning module BNN and compared with the new simulated performance quantity PRS corresponding to the same new candidate design data record DR. In doing so, a deviation D of that predictive performance quantity PRP from the corresponding new simulated performance quantity PRS is fed back to the Bayesian neural network BNN as indicated by a dashed arrow in figure 3. The deviation D may be determined as a vector norm of a difference between a respective first vector representing the quantity PRP and a corresponding second vector representing the quantity PRS, e.g. like *D* = ∥ *PRS - PRP* ∥.

By means of that feedback, the Bayesian neural network BNN is trained to minimize, at least on average, the deviation D and to output uncertainties UC which reflect the actual statistics of the training data. As mentioned above, a respective uncertainty UC may be represented by a statistical variance, a statistical standard deviation, a confidence interval, or a probability distribution.

After the training phase, the at least partially trained Bayesian neural network BNN can be used as a statistical estimator. The Bayesian neural network BNN is then particularly enabled to estimate from a design data record DR specifying a design variant of the product P, a predictive performance quantity PRP and a predictive uncertainty UC of that performance quantity PRP.

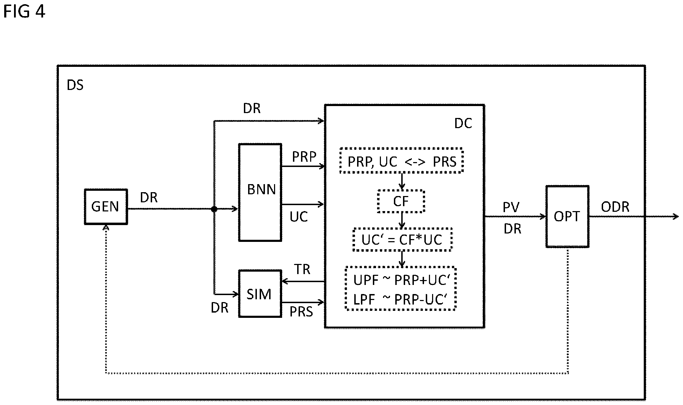

Figure 4 illustrates an optimization of a design of the product P by the design system DS. The latter comprises the simulator SIM and the Bayesian neural network BNN, which is assumed to be at least partially trained in at least one previously performed training phase as described above. It is further assumed that the optimization process is in an intermediate phase between, i.e. outside of the disjoint training phases of the design system DS.

The design system DS further comprises a design generator GEN for generating a large number of candidate design data records DR each specifying a different design variant of the product P.

Moreover, the design system DS comprises a decision module DC and an optimization module OPT.

From the design generator GEN the generated design data records DR are fed into the Bayesian neural network BNN as input data and into the decision module DC.

From a respective candidate design data record DR, the Bayesian neural network BNN generates a predictive performance quantity PRP, and in parallel, a corresponding uncertainty UC of that predictive performance quantity PRP. The predictive performance quantity PRP and the corresponding uncertainty UC are fed into the decision module DC. The latter uses a correction factor CF for correcting the uncertainty UC resulting in a corrected uncertainty UC'. Depending on the predictive performance quantity PRP and the corresponding corrected uncertainty UC', the decision module DC decides whether to run or to skip a simulation of the respective design variant by the simulator SIM.

As mentioned above, the simulator SIM is enabled to carry out a detailed physical high-fidelity simulation of a design variant on the basis of a corresponding design data record DR. For that purpose, a design data record DR that is decided to be simulated, is transmitted from the design generator GEN to the simulator SIM. For performing such detailed physical simulations many efficient methods, e.g. finite-element methods, are known.

In the present case, the simulator SIM particularly determines the simulated performance quantity PRS of the respective simulated design variant.

Usually, such performance quantities can be determined quite accurately by simulation. However, such accurate physical simulations often require considerable computation resources. An execution of trained machine learning modules, like BNN, on the other hand, normally requires much less computational effort. Hence, it appears advantageous to skip expensive simulations if the results, here PRP, of the machine learning module BNN indicate a high probability that a respective design variant performs worse than previously evaluated design variants and, therefore, is unlikely to be selected for manufacturing the product P.

So as not to overlook good design candidates which are underestimated by the machine learning module BNN, the decision module DC evaluates a respective predicted performance quantity PRP together with its reliability. The reliability is derived from the uncertainty UC corresponding to that predicted performance quantity PRP.

As mentioned above, the uncertainties UC as output by the machine learning module BNN are only estimations. In order to get a more precise measure of a reliability of the predicted performance quantities PRP, the invention advantageously uses previous simulation results to calibrate the uncertainties UC.

According to the present embodiment, the decision module DC compares all simulated performance quantities PRS generated since the last training phase with the corresponding predictive performance quantities PRP and their uncertainties UC. From this, the decision module DC calculates a correction factor, here CF, to be used for subsequently determined uncertainties UC. In particular, these uncertainties UC are multiplied in each case by the correction factor CF to obtain a corrected uncertainty UC' = CF*UC. In this way, systematic overestimations or underestimations of the uncertainties UC can be considerably reduced.

Preferably, the correction factor CF is updated with each newly simulated design variant. This means that the successful completion of each simulation which was decided to run after the last training phase, triggers a recalculation of the correction factor CF.

The correction factor CF may be calculated or recalculated, respectively, by the decision module DC as follows:
1. For the first calculation after a training phase, the correction factor CF is initialized with a value of 1.0. Otherwise, the previously calculated correction factor is kept.
2. All simulated design variants and corresponding simulated performance quantities PRS since the last training phase are selected from the database DB.
3. For each selected simulated design variant, a corresponding predictive performance quantity PRP and its uncertainty UC are determined by the machine learning module BNN.
4. A correction factor CF is determined by the following steps:
   a) Multiple uncertainty scaling factors are provided. The uncertainty scaling factors may be generated by a generator or may be provided in the form of a predetermined list of values, e.g. (0.1, 0.2, 0.5, 0.75, 1.0, 1.33, 2, 5, 10).
   b) For each respective uncertainty scaling factor, a log-likelihood function is evaluated to calculate a probability of the selected simulated performance quantities PRS being in line with the corresponding predictive performance quantities PRP and their uncertainties UC multiplied by the respective uncertainty scaling factor.
   c) The uncertainty scaling factor with the highest log-likelihood value is selected as most likely uncertainty scaling factor MLUC.
   d) The current correction factor CF is modified according to the most likely uncertainty scaling factor MLUC. Preferably, this is done in the form of a smooth update like CT_{new} = A*MLUC + (1-A)*CT, with CT_{new} denoting the updated correction factor. The variable A denotes a smoothing factor and may, e.g., be chosen as A=0.25. This smoothing of the update process makes it more robust against fluctuations and instabilities over time.

The above process requires only little computational effort. Hence, it can be easily repeated after each newly simulated design variant. Typical correction factors CF are between 0.5 and 2.

As already mentioned above, a respective corrected uncertainty UC' = UC*CF is used to decide whether a respective simulation is run or skipped. If the respective corrected uncertainty UC' is low, the corresponding predicted performance quantity PRP may be accurate enough, so the simulation may be skipped. If the respective corrected uncertainty UC' is high, on the other hand, the corresponding predictive performance quantity may be not reliable enough. In that case a simulation may be run to yield a more accurate performance prediction.

In order to decide on the simulation, the decision module DC may also take the respective predictive performance quantity PRP into account. According to a possible implementation, the respective predictive performance quantity PRP is increased by the corresponding corrected uncertainty UC' resulting in a likely upper performance threshold UPF = PRP+UC' for the corresponding performance quantity. Accordingly, the respective predictive performance quantity PRP is decreased by the corresponding corrected uncertainty UC' resulting in a likely lower performance threshold LPF =PRP-UC' for the corresponding performance quantity.

Based on those lower and upper thresholds UPF and LPF, it can be decided to skip the simulation of a current design variant, if the upper threshold UPF of the current design variant is lower than a first quantile of e.g. 25% of the lower thresholds LPF of previously evaluated design variants and/or is lower than a second quantile of e.g. 25% of the simulated performance quantities PRS of previously simulated design variants. I.e. the simulation is skipped in cases where it appears to be unlikely that the current design variant is competitive to other design data records.

On the other hand, it may be decided to run the simulation of a current design variant, if the upper threshold UPF of the current design variant is higher than a given third quantile of e.g. 75% of the upper thresholds UPF of previously evaluated design variants.

As a consequence of deciding to run a simulation, the decision module DC generates a trigger signal TR and transmits it to the simulator SIM. The trigger signal TR causes the simulator SIM to simulate the respective design variant specified by the respective design data record DR. As a result of the simulation, the simulator SIM generates a simulated performance quantity PRS of that design variant. The simulated performance quantity PRS is then transmitted from the simulator SIM to the decision module DC.

If the simulation is run, the decision module DC selects the simulated performance quantity PRS as a performance value PV for the respective design variant. If otherwise, the simulation is skipped, the decision module DC selects the predictive performance quantity PRP as performance value PV. In either case, the resulting performance value PV is allocated to the corresponding design data record DR in the database DB.

The candidate design data records DR and the corresponding performance values PV are transmitted from the decision module DC to the optimization module OPT. Depending on the received performance values PV, the optimization module OPT selects from the candidate design data records DR one or more design data records which exhibit a highest or a particular high performance value PV.

From the one or more selected design data records DR, the optimization module OPT takes or interpolates a performance-optimizing design data record ODR. The performance-optimizing design data record ODR is then output in order to control the production plant PP as described above.

According to an advantageous implementation, the optimization module OPT may influence the design generator GEN to drive the generation of the candidate design data records DR in the direction of design variants with higher performance. This influence is indicated by a dotted arrow in figure 4.

## Claims

1. A computer-implemented method for controlling a production plant (PP) to manufacture a product (P), comprising:
a) successively generating design data records (DR), each structurally specifying a design variant of the product,
b) providing a simulator (SIM) for simulating a design variant, and for determining a simulated performance quantity (PRS) for that design variant,
c) providing a machine learning module (BNN) to be trained to determine from a design data record (DR), a predictive performance quantity (PRP) for the corresponding design variant and an uncertainty (UC) of that predictive performance quantity (PRP),
d) inputting a respective generated design data record (DR) into the machine learning module (BNN) or simulating the corresponding design variant by the simulator (SIM),
e) training the machine learning module (BNN) in disjoint training phases (TP1, TP2, TP3) using simulated performance quantities (PRS) as training data,
f) between the disjoint training phases (TP1, TP2, TP3)
f1) deriving by means of simulated performance quantities (PRS), a correction factor (CF) for uncertainties (UC) determined by the machine learning module (BNN),
f2) for a subsequently generated design data record (DR)
- correcting an uncertainty (UC) determined by the machine learning module (BNN) by the correction factor (CF),
- depending on the corrected uncertainty (UC'), deciding whether to run or to skip the simulation,
- generating a performance value (PV) derived from the simulated performance quantity (PRS) if the simulation is run, or otherwise from the predictive performance quantity (PRP) determined by the machine learning module (BNN),
g) depending on the generated performance values (PV), determining from the generated design data records (DR) a performance-optimizing design data record (ODR), and
h) outputting the performance-optimizing design data record (ODR) for controlling the production plant (PP).

2. Method according to claim 1, wherein
each training phase (TP1, TP2, TP3) is only performed after multiple simulated performance quantities (PRS) not used in previous training phases (TP1, TP2) have accumulated.

3. Method according to one of the preceding claims, wherein
a first training phase (TP1) is only performed after a predetermined first number (N1) of design variants was simulated.

4. Method according to one of the preceding claims, wherein
after a given training phase (TP1, TP2), a next training phase (TP2, TP3) is only performed after a predetermined second number (N2) of new design data records was generated and/or after a third number of new design variants was simulated.

5. Method according to one of the preceding claims, wherein
an execution of a simulation triggers a calculation or an update of the correction factor (CF).

6. Method according to one of the preceding claims, wherein
between the training phases (TP1, TP2, TP3), simulated performance quantities (PRS) not used in previous training phases (TP1, TP2) are used as test data for determining a prediction quality of the machine learning module (BNN).

7. Method according to claim 6, wherein
depending on the prediction quality
- a training phase (TP1, TP2, TP3) is started, stopped, or executed,
- the correction factor (CF) is derived, and/or
- the decision on running or skipping the simulation is made.

8. Method according to one of the preceding claims, wherein
the correction factor (CF) is determined by means of a maximum likelihood estimation.

9. Method according to one of the preceding claims, further comprising:
providing multiple uncertainty scaling factors,
calculating for each respective uncertainty scaling factor, a likelihood for a distribution of simulated performance quantities (PRS) being in line with corresponding predictive performance quantities (PRP) and corresponding uncertainties scaled by the respective uncertainty scaling factor, and
selecting an uncertainty scaling factor with a highest or with a particular high likelihood for deriving the correction factor (CF).

10. Method according to one of the preceding claims, wherein
the machine learning module (BNN) comprises or implements a Bayesian machine learning model, a Bayesian neural network, and/or a Gaussian process model.

11. Method according to one of the preceding claims, wherein
the uncertainty (UC) is represented by a statistical variance, a statistical standard deviation, a confidence interval, a probability distribution, and/or a discrete probability distribution.

12. A system for controlling a production plant (PP) to manufacture a product (P), the system comprising means for carrying out a method according to one of the preceding claims.

13. A computer program product for controlling a production plant (PP) to manufacture a product (P), the computer program product comprising instructions which, when the program is executed by a computer, cause the system according to claim 11 to carry out a method according to one of the claims 1 to 11.

14. A non-transient computer readable storage medium storing a computer program product according to claim 13.
